# FASCICULE DE BREVET EUROPEEN

(11) **EP 0 479 643 B1**
(45) Date de publication et mention de la délivrance du brevet: **16.03.1994**
(21) Numéro de dépôt: 91402532.5
(22) Date de dépôt: 24.09.1991
(51) Int. Cl.: B60J 10/00

(54) **Joint profilé à base d'élastomère, matière plastique ou analogue, procédé de fabrication d'un tel joint et son procédé de montage sur un support**
Kunststoff oder dergleichen enthaltender Dichtungsprofilstreifen, Herstellungsverfahren eines solchen Streifens und seine Befestigung auf einem Tragelement
Sealing joint based on plastic or the like, method of producing such a joint and its mounting on a support structure

(30) Priorité: 04.10.1990 FR 9012241
(43) Date de publication de la demande: 08.04.1992
(73) Titulaire: HUTCHINSON S.A., F-75008 Paris (FR)
(72) Inventeur: Guillon, Henri, F-45700 Saint-Maurice-Sur-Fessard (FR)
(74) Mandataire: Orès, Bernard

(56) Documents cités:
- EP-A- 0 111 738

## Description

L'invention a pour objet un joint profilé à base d'élastomère, matière plastique ou analogue et son procédé de fabrication.

L'invention s'applique notamment, mais non exclusivement, aux joints à base de caoutchouc(s) naturel(s) ou synthétique(s), utilisés seuls ou suivant différents coupages, ou aux joints à base de matières plastiques, ou d'élastomères thermoplastiques, ou de matériaux analogues et elle trouve une utilisation particulièrement intéressante dans le domaine des joints obtenus par extrusion ou coextrusion de leurs matériaux constitutif(s) et, principalement, dans celui des joints d'étanchéité et/ou des joints de protection externe équipant des automobiles de même que d'autres véhicules de transport. Dans ce domaine, les joints mis en oeuvre comprennent généralement une partie à section en U, enfermant une armature de renfort et munie d'agrafes propres à coopérer avec des pions ou rivets du type de ceux connus sous le nom KSM, préalablement fixés sur la pièce de carrosserie à équiper du joint. Etant donné que les rivets sont posés par des robots et que, notamment pour des joints d'étanchéité, ces derniers doivent être cintrés et galbés avant d'être munis de leurs agrafes de fixation aux rivets, il en résulte fréquemment des montages qui ne sont pas entièrement satisfaisants lorsque le positionnement des agrafes et des rivets n'est pas en correspondance rigoureuse. En outre, la mise en oeuvre d'un tel procédé de montage est relativement longue sans qu'il soit possible de garantir une tenue satisfaisante du joint profilé sur son support.

Etant donné que l'on cherche à réduire le plus possible les coûts de fabrication, de même que les temps de mise en oeuvre, d'une part, tout en assurant la qualité des produits obtenus, d'autre part, le problème se pose de fournir un joint profilé à base d'élastomère, de matière plastique ou analogue et un procédé de fabrication d'un tel joint qui ne présentent pas les inconvénients mentionnés de la technique antérieure connue.

C'est, par conséquent, un but général de l'invention de fournir un joint à base d'élastomère, matière plastique ou analogue et son procédé de fabrication qui apportent une solution au problème posé.

C'est, aussi, un but de l'invention de fournir un tel joint dont le coût ne soit pas supérieur à celui des joints antérieurs connus et qui, à cet égard, puisse être fabriqué par les techniques usuelles d'extrusion ou de moulage.

C'est, également, un but de l'invention de fournir un procédé de fabrication du joint qui soit simple et économique à mettre en oeuvre y compris, en ce qui concerne le montage, dans son application à des formes complexes de supports et/ou de joints.

Si l'on a déjà proposé, par exemple dans EP-A1-0 377 376 ou JP-A-173 619/83 de fixer par collage un vitrage muni d'un cadre en faisant application d'un cordon de collage en matière thermofusible et d'une machine de chauffage par induction, ni l'un ni l'autre de ces documents ne vise un joint proprement dit et son procédé de fabrication.

Un joint profilé à base d'élastomère, matière plastique ou analogue comprenant un élément profilé et un moyen de fixation sur un support, notamment une pièce métallique de carrosserie d'automobile à l'aide d'une machine de chauffage par induction est caractérisé en ce que l'élément profilé est extrudé ou moulé en au moins une matière choisie parmi les élastomères, les matières plastiques, les élastomères thermoplastiques ou les matériaux analogues et en ce que le moyen de fixation est une semelle elle aussi extrudée ou moulée, propre à être réunie à l'élément profilé.

Dans une première forme de réalisation, la semelle est réunie et coopère avec l'élément profilé par conjugaison de formes.

Dans une réalisation particulièrement avantageuse, la semelle est en une matière plastique ou un élastomère thermoplastique.

Dans une autre forme de réalisation, la semelle est en un matériau du type adhésif thermofusible ou du type mastic ou du type colle thermodurcissable.

Un procédé selon l'invention de fabrication d'un joint profilé à base d'élastomère, matière plastique ou analogue comprenant un élément profilé et un moyen de fixation sur un support à l'aide d'une machine de chauffage par induction consiste alors, dans un premier mode d'exécution, à produire d'abord ledit moyen de fixation sous forme d'une semelle par moulage ou extrusion, à stocker ladite semelle sur une bobine et, après refroidissement de l'élément profilé à base d'élastomère, matière plastique ou analogue lui aussi fabriqué par extrusion, à assembler la semelle et ledit élément par conjugaison de formes, avantageusement par un emboîtement en continu à la manière d'un encliquetage de parties correspondantes dudit élément et de la semelle.

Un joint ainsi obtenu peut alors être coupé en continu, suivant des tronçons de longueur prédéterminée, propre à être manipulés sans glissement de la semelle par rapport à l'élément profilé, et sans que ces deux parties puissent être désolidarisées en l'absence d'un effort particulier dans ce sens.

Pour le montage d'un joint selon l'invention sur un support qu'il est destiné à équiper, par exemple une pièce métallique de carrosserie d'automobile, un tronçon de joint coupé à longueur prédéterminée est mis en forme, est amené au contact de ladite pièce, puis en est solidarisé par fusion et collage de la semelle à l'aide d'une électrode de forme provoquant un chauffage par induction de ladite pièce.

L'invention sera bien comprise par la description qui suit, faite à titre d'exemple et en référence au dessin annexé, dans lequel :
- la figure 1 est une vue en coupe d'une première réalisation d'un joint selon l'invention ;
- la figure 2 est une vue en coupe d'une autre forme de réalisation.

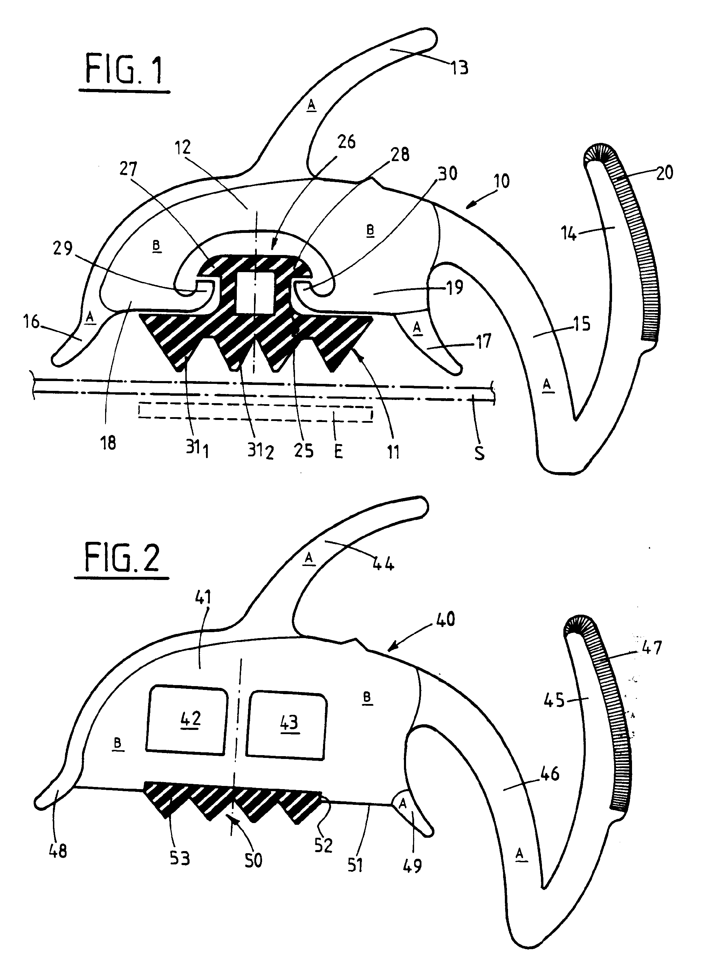

On se réfère d'abord à la figure 1 qui montre une première réalisation d'un joint profilé, J, à base d'élastomère(s), élastomère(s) thermoplastique(s) (TEP), matière plastique ou analogue selon l'invention. Destiné à être monté sur la caisse d'un véhicule automobile pour faire étanchéité entre ladite caisse et la porte du véhicule, le joint J résulte de la réunion entre elles de deux parties profilées, 10 et 11, respectivement. La première, 10, qui constitue le joint proprement dit comprend un corps 12 à section droite quelque peu en forme de C en un matériau du type élastomère, comme un caoutchouc ou un coupage de caoutchoucs, dont la dureté, repérée par la lettre B, peut être de l'ordre de 50 Shore D. Du corps 12 sont solidaires :
. une lèvre 13 ;
. une lèvre d'étanchéité 14, portant sur une partie de sa face externe un revêtement 20 de floc ou d'un matériau à bonnes propriétés de glissement, et qui est raccordée au corps 12 par un bras en V, 15 ; et
. deux petites lèvres 16 et 17 ménagées approximativement aux extrémités des ailes 18 et 19, respectivement, limitant la section droite en C.

Comme montré par la lettre repère A, les lèvres 13, 14, 16 et 17 de même que le bras 15 sont en un matériau élastomère ou un élastomère thermoplastique ou une matière plastique compatible avec celle formant le corps 12 mais de plus faible dureté, par exemple de l'ordre de 70 Shore A.

Conformément à l'invention, également, la seconde partie 11 du joint J est un profilé extrudé ou moulé en matière plastique ou en élastomère thermoplastique ou en un matériau analogue, propre à être assemblé par conjugaison de formes avec la partie 10 et qui constitue une semelle 25 destinée à être solidarisée avec un support S, par exemple une pièce métallique de carrosserie par application d'un chauffage par induction de ladite pièce. Comme bien visible sur la figure 1, la partie 11 comprend une poutre 26, évidée pour diminuer le poids de matière consommée, et dont la section droite est quelque peu en forme de T pour ménager deux bords 27 et 28 servant à retenir les extrémités recourbées 29 et 30, respectivement, des ailes 18 et 19 du corps 12 ; la semelle 25, reliée à l'âme de la poutre 26, est striée suivant des dents 31₁, 31₂, etc... .

Pour la fabrication du joint profilé J, notamment par mise en oeuvre de techniques d'extrusion, on fabrique d'abord la partie 11, par exemple en un matériau du type des élastomères thermoplastiques comme ceux vendus sous la dénomination PEBAX (une Marque déposée de la Société ATOCHEM), et l'on stocke cette partie enroulée sur une bobine. On fabrique ensuite, ou concurremment, la partie 10 qui, après refroidissement, est solidarisée par conjugaison de formes, le plus simplement par clipage de la poutre 26 dans le corps 12, en tirant parti de la déformation élastique des extrémités 29 et 30 de cette partie.

Dans la réalisation de la figure 2 l'élément 40, correspondant à l'élément 10 de la forme de réalisation précédente, est obtenu par extrusion ou moulage d'un ou plusieurs matériaux du type élastomère, élastomère(s) thermoplastique(s) ou matériau analogue. Il comprend un corps 41 dont la section droite, quelque peu rectangulaire à coins arrondis, est évidée en 42 et 43, et des lèvres 44 et 45, cette dernière étant reliée au corps 41 par un bras en V, 46, et portant sur une partie de sa face externe un revêtement 47 analogue au revêtement 20 de la réalisation précédente. Du corps 41, en un matériau repéré B, sont également solidaires de petites lèvres 48 et 49, analogues aux lèvres 16 et 17 de la réalisation précédente, les lèvres 44, 45, 48 et 49 de même que le bras 46 étant ici aussi en un matériau repéré A, de même dureté que celui portant la même référence sur la réalisation selon la figure 1.

A l'élément profilé 40 est associé, selon l'invention, une semelle à profil en dents de scie, 50, en un matériau thermofusible comme ceux du type "hot melt" ou du genre mastic ou du genre d'une colle thermodurcissable et qui est rapportée sur la face 51 de l'élément 40 dans un lamage 52 du corps 41, la semelle 50, à stries 53, étant de préférence rapportée sur l'élément 40 après refroidissement de celui-ci à la sortie de la machine d'extrusion, lorsque ledit élément est ainsi fabriqué.

Quel que soit son mode de réalisation, un joint selon l'invention est fixé sur un support comme S, par exemple une pièce de carrosserie automobile, par application d'un chauffage inductif. De façon plus précise, après découpe du joint à une longueur prédéterminée, celui-ci est mis en forme et positionné sur le support S qu'il doit équiper : on approche alors de l'ensemble une électrode E reliée au générateur d'une machine de chauffage par induction, fonctionnant par exemple à une centaine de kHz et la semelle 25 ou 50, partiellement fondue au contact de la pièce métallique chauffée, réalise alors la solidarisation par collage du joint sur le support.

Le procédé peut être facilement automatisé en formant l'électrode E en tant que mâchoire mobile d'un robot propre à exercer également, si nécessaire, une pression d'application du joint sur le support S.

On s'affranchit ainsi, par le procédé selon l'invention, de la nécessité de la pose d'agrafes sur le joint et de rivets comme des rivets KSM sur la partie métallique de la carrosserie, avec pour corollaire une diminution importante du temps de montage, ce dernier étant en outre toujours de bonne qualité, indépendamment des éventuels défauts des pièces métalliques qui, s'ils existent, sont épousés par la semelle 25 ou 50.

Le procédé selon l'invention n'est nullement limité, bien entendu, à l'application décrite à titre d'exemple. Il peut, ainsi, également, sans autre, être mis en oeuvre pour le montage sur des véhicules de parties de vitrage, comme des pare-brises, le support métallique étant, dans ce cas, celui constitué par la feuillure de montage du vitrage.

## Revendications

1. Joint profilé à base d'élastomère, matière plastique ou analogue, comprenant un élément profilé (10, 40) et un moyen de fixation (25, 50) sur un support (S), notamment une pièce métallique de carrosserie d'automobile à l'aide d'une machine de chauffage par induction, caractérisé en ce que l'élément profilé (10, 40) est extrudé ou moulé en au moins une matière choisie parmi les élastomères, les matières plastiques, les élastomères thermoplastiques ou les matériaux analogues et en ce que le moyen de fixation est une semelle (25, 50) elle aussi extrudée ou moulée, propre à être réunie à l'élément profilé (10, 40).

2. Joint selon la revendication 1, caractérisé en ce que la semelle (25) est réunie et coopère avec l'élément profilé (10) par conjugaison de formes.

3. Joint selon la revendication 2, caractérisé en ce que la semelle (25) est en une matière plastique ou en un élastomère thermoplastique.

4. Joint selon la revendication 1, caractérisé en ce que la semelle (50) est en un matériau du type adhésif thermofusible ou du type mastic ou du type colle thermodurcissable.

5. Procédé de fabrication d'un joint profilé à base d'élastomère, matière plastique ou analogue comprenant un élément profilé (10, 40) et un moyen de fixation (25, 50) sur un support (S) à l'aide d'une machine de chauffage par induction, caractérisé en ce qu'on produit d'abord ledit moyen de fixation sous forme d'une semelle (25) par moulage ou extrusion, en ce qu'on stocke ladite semelle sur une bobine et, après refroidissement de l'élément profilé (10) à base d'élastomère, matière plastique ou analogue, fabriqué par extrusion, en ce qu'on assemble la semelle (25) et ledit élément (10) par conjugaison de formes, avantageusement par un emboîtement en continu à la manière d'un encliquetage de parties correspondantes dudit élément et de la semelle.

## Patentansprüche

1. Elastomer, Kunststoff oder dergleichen enthaltender Dichtungsprofilstreifen, mit einem profilierten Element (10, 40) und einem Mittel zur Befestigung (25, 50) auf einem Träger (S), insbesondere auf einem Metallteil einer Kraftfahrzeugkarosserie, mit Hilfe einer Induktions-Heizmaschine, dadurch **gekennzeichnet**, daß das profilierte Element (10, 40) aus mindestens einem Material extrudiert oder abgeformt ist, das unter den Elastomeren, Kunststoffmaterialien, thermoplastischen Elastomeren oder dergleichen Materialien gewählt ist, und daß das Befestigungsmittel eine Fußplatte (25, 50) ist, die ebenfalls extrudiert oder abgeformt und dazu eingerichtet ist, mit dem profilierten Element (10, 40) vereint zu werden.

2. Dichtung nach Anspruch 1, dadurch **gekenn****zeichnet**, daß die Fußplatte (25) mit dem profilierten Element (10) durch Zuordnung von Formen vereint ist und zusammenwirkt.

3. Dichtung nach Anspruch 2, dadurch **gekennzeichnet,** daß die Fußplatte (25) aus einem Kunststoff oder einem thermoplastischen Elastomer besteht.

4. Dichtung nach Anspruch 1, dadurch **gekennzeichnet,** daß die Fußplatte (50) aus einem Material nach Art eines Heißschmelzklebers besteht, der entweder der Art eines warmhärtenden Kitts oder der Art eines warmhärten- den Leims angehört.

5. Verfahren zur Herstellung eines ein Elastomer, einen Kunststoff oder dergleichen enthaltenden Dichtungsprofilstreifens, mit einem profilierten Element (10, 40) und einem Mittel zur Befestigung (25, 50) auf einem Träger (S) mit Hilfe einer Induktions-Heizmaschine, dadurch **gekennzeichnet,** daß man zunächst das Befestigungsmittel in der Form einer Fußplatte (25) durch Abformen oder Extrusion bildet, daß man die genannte Fußplatte auf einem Wickel aufbewahrt und daß man nach dem Abkühlen des profilierten Elements (10) aus Elastomer, Kunststoff oder dergleichen, das durch Extrusion hergestellt ist, die Fußplatte (25) und das genannte Element (10) durch Verbindung von Formen zusammensetzt, vorteilhafterweise durch fortlaufendes Ineinanderfügen nach Art einer Verrastung von entsprechenden Teilen des genannten Elements und der Fußplatte.

## Claims

1. A profiled seal based on an elastomer, plastics or similar material comprising a profiled element (10, 40) and means (25, 50) of fixing it to a support (S), particularly a metal motor car body member, by means of an induction heating machine, characterised in that the profiled element (10, 40) is extruded or moulded from at least one material chosen from among the elastomers, the plastics materials, the thermoplastic elastomers or similar materials and in that the fixing means is a flange (25, 50) which is itself extruded or moulded and is adapted to be connected to the profiled element (10, 40).

2. A seal according to Claim 1, characterised in that the flange (25) is connected to and cooperates with the profiled element (10) by a mating of their shapes.

3. A seal according to Claim 2, characterised in that the flange (25) is made from a thermoplastics elastomer or synthetic plastics material.

4. A seal according to Claim 1, characterised in that the flange (50) is of a material of the thermofusible adhesive type or of the mastic type or of the heat-hardenable adhesive type.

5. A method of producing a profiled seal based on an elastomer, a plastics or like material comprising a profiled element (10, 40) and means (25, 50) for mounting it on a support (S) by means of an induction heating machine, characterised in that firstly the said fixing means is produced in the form of a flange (25) by moulding or extrusion, the said flange is stored on a bobbin and, after cooling of the profiled element (10) which is based on an elastomer, plastics or similar material, produced by extrusion, in that the flange (25) and the said element (10) are assembled by a mating of their shapes, advantageously by continuous interlocking in the manner of a snap-fitting of the corresponding parts of the said element and of the flange.
